(19) **Europäisches Patentamt European Patent Office Office européen des brevets**

(11) **EP 3 378 695 B1**

(12) **EUROPEAN PATENT SPECIFICATION**

(45) Date of publication and mention of the grant of the patent:
**27.08.2025 Bulletin 2025/35**

(21) Application number: **16866133.8**

(22) Date of filing: **28.10.2016**

(51) International Patent Classification (IPC):
**B60L 1/00** *(2006.01)*

(52) Cooperative Patent Classification (CPC):
**B60L 3/00; B60L 1/00; B60L 3/0007; B60L 15/20;
G05D 1/02;** B60L 2200/34; B60L 2240/642;
B60L 2240/647; Y02T 10/72; Y02T 90/16

(86) International application number:
**PCT/JP2016/082136**

(87) International publication number:
**WO 2017/086131 (26.05.2017 Gazette 2017/21)**

(54) **MOVING BODY**

BEWEGLICHER KÖRPER

CORPS MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2015   JP 2015226382**

(43) Date of publication of application:
**26.09.2018   Bulletin 2018/39**

(73) Proprietors:
• **AISIN CORPORATION
Kariya-shi, Aichi 448-8650 (JP)**
• **Chiba Institute of Technology
Narashino-shi, Chiba 275-0016 (JP)**

(72) Inventors:
• **OCHIAI Hirotoshi
Kariya-shi
Aichi 448-8650 (JP)**
• **ANDO Mitsuhiro
Kariya-shi
Aichi 448-8650 (JP)**
• **NAGAMINE Noboru
Kariya-shi
Aichi 448-8650 (JP)**
• **FURUTA Takayuki
Narashino-shi
Chiba 275-0016 (JP)**

• **SHIMIZU Masaharu
Narashino-shi
Chiba 275-0016 (JP)**
• **YAMATO Hideaki
Narashino-shi
Chiba 275-0016 (JP)**
• **TODA Kengo
Narashino-shi
Chiba 275-0016 (JP)**
• **KODACHI Takashi
Narashino-shi
Chiba 275-0016 (JP)**

(74) Representative: **Kramer Barske Schmidtchen
Patentanwälte PartG mbB
European Patent Attorneys
Landsberger Strasse 300
80687 München (DE)**

(56) References cited:
**WO-A1-2014/064990      JP-A- 2014 119 349
JP-A- 2014 119 349      JP-A- H0 764 634
JP-A- H0 764 634**

• **ZHANG KEQI ET AL: "National Center for Airborne Laser Mapping Airborne LIDAR Data Processing and Analysis Tools ALDPAT 1.0", 1 April 2007 (2007-04-01), pages 1 - 84, XP093032635, Retrieved from the Internet <URL:http://lidar.ihrc.fiu.edu/download/Doc/ALDPAT.pdf> [retrieved on 20230317]**

## Description

[Technical Field]

This invention relates to a mobile body.

[Background Art]

One form of a mobile body disclosed in JP 2012-220227 A has been known. The controlling of a mobile body disclosed in Fig. 1 of JP 2012-220227 A includes a step for obtaining a road surface data which includes at least a height data obtained by a road surface data obtaining portion, a step for rearranging the obtained road surface data in order of height, a step for extracting change point of the rearranged road surface data and a step for recognizing an obstacle from the change point as a border. Thus, obstacles can be accurately recognized.

Further, another form of the mobile body has been known which is shown in JP 2006-146376 A. The mobile body disclosed in Fig. 1 of JP 2006-146376 A includes ,a distance sensor 4 which measures the distance between the floor surface in front of a movable carriage 1 and the main body of the mobile body and a moving amount measuring portion 9 provided on the movable carriage 1, wherein when a deviation between the measuring distance between the front floor surface 6 in front of the movable carriage 1 and movable carriage 1 and the predetermined set value continuously exceeds a reference amount, the moving distance after the deviation has exceeded the reference amount is measured by the moving amount measuring portion 9 and when such moving distance has exceeded a reference moving amount, the movable carriage 1 is stopped by a judgment that the mobile body is in an un-travelable state. Therefore, when an inclination or step is detected at the front side of the travelling course, the height or the width of the step or a degree of inclination can be recognized to prevent an unnecessary stop of the mobile body. The mobile body continues to travel on a low step or a narrow ditch or groove, judging that such situation is an obstacle that can be cleared.

WO 2014/064990 A1 discloses a cleaning robot comprising a distance image sensor and a plane detection device.

[Technical Problem(s)]

According to the mobile body disclosed in JP 2012-220227 A, an accurate recognition of the step or inclination of a road surface on which the mobile body is travelling has been demanded. Further, according to the disclosure of JP 2006-146376 A, the detection of step or inclination of the road surface is made on the assumption that the mobile body is travelling. Accordingly, when the road surface on which the mobile body is travelling (point where the mobile body is currently travelling) is a flat surface, the travelling road surface (road surface in a direction in which the mobile body is travelling) can be detectible. However, when the road surface on which the mobile body is travelling is not flat (for example, uphill surface or downhill surface or uneven surface), the step or inclination of the road surface cannot accurately be detected.

Accordingly, this invention was made in consideration with the above-mentioned situation and the objective of the invention is to provide a mobile body which can accurately recognize the step or inclination of the road surface by suppressing the influence from the profile of the road surface on which the mobile body travels.

[Solution to Problem(s)]

In order to solve the above problems, a mobile body according to claim 1 is provided.

A mobile body according to an aspect is characterized in that the mobile body, which travels driven by a driving device, includes an obtaining portion which obtains information of surrounding of the mobile body as a three-dimensionally indicated point group data, a dividing portion which divides the point group data obtained by the obtaining portion into a plurality of sections which is a plurality of predetermined areas defined on a predetermined plane, a feature amount calculating portion which calculates a feature amount which is associated with a feature of one of the plurality of sections from a divided point group data which is the point group data belonging to the one of the plurality of sections per every section divided by the dividing portion, a search starting point setting portion which sets a search starting point which serves as a starting point for searching whether there is a travelable section in which the mobile body is travelable among the plurality of sections based on the feature amount calculated by the feature amount calculating portion, and a judging portion which judges a resembling section which includes a feature amount resembling the feature amount associated with the search starting point from among a surrounding section, which is one of the plurality of sections surrounding the search starting point set by the search starting point setting portion.

[Advantageous Effect]

According to the aspect described above, a resembling section can be judged based on the feature amount calculated per every section, referencing the search starting point among the sections surrounding the search starting point which has been set previously. In other words, the travelable section of the movable body can be judged based on the search starting point as a reference point. As a result, a mobile body which more accurately recognizes a step or an inclination of a road surface on which the mobile body travels, by suppressing an influence from a shape of the road surface on which the mobile body travels can be proposed.

[Brief Explanation of Drawings]

[Fig. 1] Fig. 1 is an outline view of a structure of a mobile body according to a first embodiment;
[Fig. 2] Fig. 2 is a schematic view of an operation information inputted to the operating device of Fig. 1 and vertical axis indicates a front/rear direction of a mobile body and a horizontal axis indicates a right/-left direction of the mobile body;
[Fig. 3] Fig. 3 is a block diagram of the mobile body shown in Fig. 1;
[Fig. 4A] Fig. 4A is a first map memorized in a control device shown in Fig. 3, indicating a relationship between a desired or intended straight traveling speed and a straight traveling speed of the mobile body;
[Fig. 4B] Fig. 4B is a second map memorized in the control device shown in Fig. 3, indicating a relationship between a desired or intended turning speed and a turning speed of the mobile body;
[Fig. 5] Fig. 5 is an explanatory view showing the sections and the point group data;
[Fig. 6] Fig. 6 is an explanatory view showing presumed plane, effective point group data and outlier values which are shown on the three-dimensional orthogonal coordinates.
[Fig. 7] Fig. 7 is an explanatory view showing presumed plane, effective point group data and normal vector which are shown on the three-dimensional orthogonal coordinates.
[Fig. 8] Fig. 8 is a map showing a relationship between the height threshold value and the inclination of the section.
[Fig. 9] Fig. 9 is an explanatory view for explaining search starting point, surrounding sections, resembling section (travelable section) and non-travelable section.
[Fig. 10] Fig. 10 is a flowchart of a program (main program) executed by the control device shown in Fig. 3;
[Fig. 11] Fig. 11 is another flowchart of a program (sub-routine, feature amount calculation) executed by the control device shown in Fig. 3; and
[Fig. 12] Fig. 12 is a further flowchart of a program (sub-routine, search starting point setting) executed by the control device shown in Fig. 3.

[Preferred Embodiments]

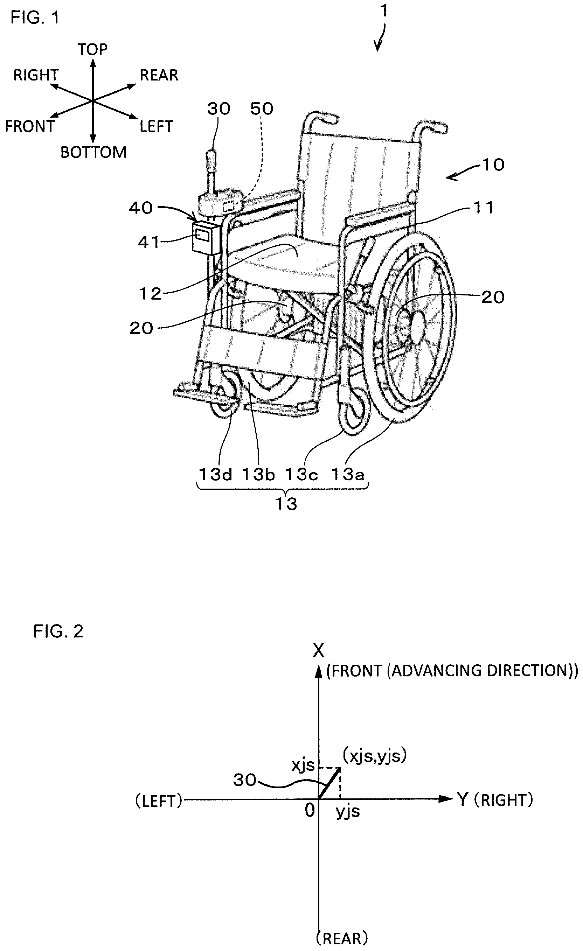

First embodiment of the mobile body will be explained hereinafter with reference to the attached drawings. As an example of the mobile body according to the embodiment, an electric wheel chair 1 shown in Fig. 1 will be explained. It is noted that for the purpose of illustration, the explanation will be made assuming that the top side and bottom side of Fig. 1 indicate the upper side and lower side of the electric wheel chair 1. Similarly, the bottom left side and the top right side of Fig. 1 indicate the front side and rear side of the electric wheel chair 1 and the top left side and the bottom right side of Fig. 1 indicate the right side and the left side of the electric wheel chair 1, respectively. The arrows in Fig. 1 indicate respective directions.

The electric wheel chair 1 includes a wheel chair main body 10, a driving device 20, an operating device 30, a detecting device 40 and a control device 50. The electric wheel chair 1 corresponds to the mobile body which travels, driven by the driving device 20 which is driven based on the input to the operating device 30 by an occupant of the mobile body. The driving device 20, the operating device 30, the detecting device 40 and the control device 50 are installed on the wheel chair main body 10. It is noted here that the mobile body is not limited to the one which is operated by an operator on board, another type, such as, an autonomous mobile body on which no operator is seated for operation can be applicable to the teachings.

The wheel chair main body 10 includes a frame 11, a seat 12 on which the occupant is seated and wheels 13. The seat 12 and the wheels 13 are assembled to the frame 11. The wheels 13 are structured to be rotatable about respective rotation axes. The wheels 13 are arranged at the right side and the left side of the wheel chair main body 10 and includes a left drive wheel 13a and a right drive wheel 13b which are driven by the driving device 20 and a left auxiliary wheel 13c and a right auxiliary wheel 13d for auxiliary supporting the traveling of the electric wheel chair 1.

The driving device 20 drives the electric wheel chair 1 by rotatably driving the respective drive wheels 13a and 13b. The driving device 20 is, for example, structured by a combination of an electric motor (not shown) and reduction gear mechanism (not shown). The driving device 20 is provided at respective drive wheels 13a and 13b (total number of the driving device 20 is two).

The operating device 30 is operated by the occupant of the electric wheel chair 1 to give instructions regarding to the straight traveling speed "v" and the turning speed "w" of the electric wheel chair 1. The straight traveling speed "v" is a speed of the electric wheel chair 1 traveling in a forward direction (front direction) with respect to the electric wheel chair 1. The turning speed "w" is an angular speed of the electric wheel chair 1 turning around the center of gravity thereof, as a turning center. In this embodiment, a joystick is used as the operating device 30. The position that the operating device 30 is erected upright in a vertical direction is determined to be the non-operated position (hereinafter, referred to as "neutral position"). The operating device 30 is operated by the occupant of the wheel chair 1 by inclining the device 30 from the neutral position to an angular position. The operated state of the operating device 30 is indicated by the coordinates of the tip end of the operating device 30, when the operating device 30 is projected onto the X-Y plane which is in parallel with the horizontal plane as shown in Fig. 2. The X-axis is the same direction with the front/rear direction of the electric wheel chair 1 and positive direction of the X-axis is the same with the front direction of the electric wheel chair 1. The Y-axis is the same direction with the right/left direction of the electric wheel chair 1 and the positive direction of the Y-axis is the same with the right direction of the electric wheel chair 1. The value of the X-coordinates indicates a desired straight traveling speed "xjs" of the electric wheel chair 1 corresponding to the straight traveling speed desired by the occupant of the wheel chair 1. The value of the Y-coordinates indicates a desired turning speed "yjs" of the electric wheel chair 1 corresponding to the turning speed desired by the occupant of the wheel chair 1. The values of the desired straight traveling speed "xjs" and the desired turning speed yjs" are outputted to the control device 60, every first predetermined time as the operation information inputted to the operating device 30. The first predetermined time is set to be, for example, 1 / 25 second.

The detecting device 40 is a device which detects a detecting object located around the electric wheel chair 1. The detecting object includes a road surface on which the electric wheel chair 1 is to travel from now, a human, and obstacles, etc.

The detecting device 40 is formed by a 3D (three dimensional) measurement section sensor (laser range scanner (3D scanner)). The detecting device 40 receives the reflection wave from an detected object at the detecting portion 41 by emitting laser in a horizontal direction and up/down direction (three dimensionally) from the detecting portion 41. Thus, the detecting device 40 obtains the straight distance from the detecting portion 41 to the detected object, horizontal angle (with respect to a reference (for example, to the straight forward direction of the electric wheel chair 1)) and a vertical angle (with respect to a reference (for example, relative to the horizontal direction of the electric wheel chair 1)). Eventually, the detecting device 40 can obtain the three-dimensional coordinates associated with the detected object as a point group data D. The surrounding information (detected object information) is shown as a point group data D which is the three dimensional coordinates. The point group data D represents the position and shape of the surface of the detected object. The detecting device 40 irradiates the laser radially to the surrounding (in this embodiment, front side) of the electric wheel chair 1 in a radial direction. The irradiation possible angular range of the laser corresponds to the angular range that the detecting device 40 can detect the detecting object. The detecting device 40 obtains for example, the surrounding information every first predetermined time. The surrounding information obtained by the detecting device 40 is outputted to the control device 50.

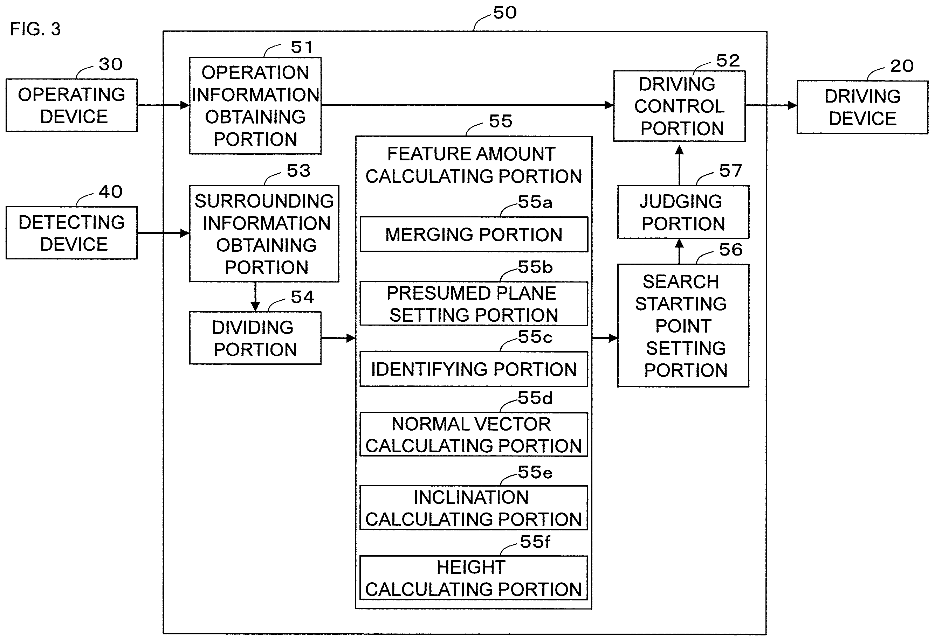

The control device 50 drives the electric wheel chair 1 to travel by controlling the driving amount of the driving device 20 based on the operation information. The driving device 20, the operating device 30 and the detecting device 40 are connected to the control device 50 as shown in Fig. 3. The control device 50 includes an operation information obtaining portion 51, a driving control portion 52, a surrounding information obtaining portion 53, a dividing portion 54, a feature amount calculating portion 55, a search starting point setting portion 56 and a judging portion 57.

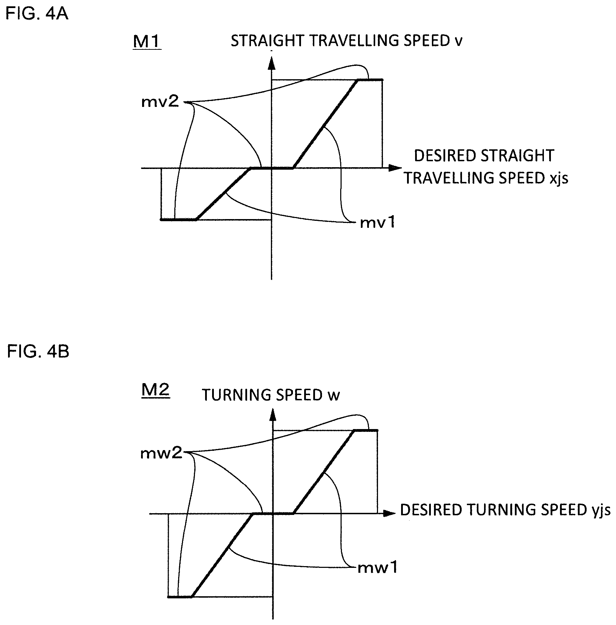

The operation information obtaining portion 51 obtains the operation information from the operating device 30. The driving control portion 52 controls the driving device 20 to control the travelling of the electric wheel chair 1 based on the operation information obtained by the operation information obtaining portion 51. In more detail, the control device 50 starts travelling control from the time when the operating device 30 is operated and the control device 50 obtains the operation information from the operating device 30. The control device 50 converts the operation information (desired straight traveling speed "xjs" and desired turning speed "yjs") from the operating device 30 into the straight travelling speed "v" and the turning speed "w". The control device 50 calculates the straight travelling speed "v" from the obtained desired straight travelling speed "xjs", based on the first map M1 shown in Fig. 4A. The first map M1 indicates the relationship between the desired straight traveling speed "xjs" and the straight traveling speed "v". The control device 50 calculates the turning speed "w" from the obtained desired turning speed "yjs", based on the second map M2 shown in Fig. 4B. The second map M2 indicates the relationship between the desired turning speed "yjs" and the turning speed "w".

The first map M1 includes proportional portions mv1 in which the desired straight traveling speed "xjs" and the straight traveling speed "v" are proportional and dead zone portions mv2 in which the straight traveling speed "v" is constant regardless of the magnitude of the desired straight traveling speed "xjs" as shown in Fig. 4A. When the straight traveling speed "v" is a positive value, the electric wheel chair 1 moves forward. On the other hand, when the straight traveling speed "v" is a negative value, the electric wheel chair 1 moves rearward. Further, the second map M2 includes proportional portions mw1 in which the desired turning speed "yjs" and the turning speed "w" are proportional and dead zone portions mw2 in which the turning speed "w" is constant regardless of the magnitude of the desired turning speed "yjs" as shown in Fig. 4B. When the turning speed "w" is a positive value, the electric wheel chair 1 turns in the right direction. On the other hand, when the turning speed "w" is a negative value, the electric wheel chair 1 turns in the left direction.

The control device 50 controls the driving amount (number of rotation) of the driving device 20 based on the converted values of the straight traveling speed "v" and the turning speed "w". In detail, the converted values of the straight traveling speed "v" and the turning speed "w" are further converted into the rotation speed of the left drive wheel 13a and the rotation speed of the right drive wheel 13b. The magnitude of the straight traveling speed "v" is proportional to the magnitude of the rotation speed of the left drive wheel 13a and the magnitude of the rotation speed of the right drive wheel 13b. Further, the magnitude of the turning speed "w" is proportional to the magnitude of the difference in rotation speed between the left drive wheel 13a and the right drive wheel 13b. The relationship between the straight traveling speed "v" and the turning speed "w" and the rotation speed of the left drive wheel 13a and the right drive wheel 13b is obtained in advance by calculation through the experimental work or the like. It is noted that since the driving device 20 is PWM (Pulse Width Modulation)-controlled, the control instruction value of the driving device 20 is calculated based on the duty ratio (cycle).

While the control device 50 is performing the travelling control, if the occupant of the electric wheel chair 1 moves the position of the operating device 30 to the neutral position, the straight travelling speed "v" and the turning speed "w" become zero and the electric wheel chair 1 stops. Then the control device 50 finishes the travelling control.

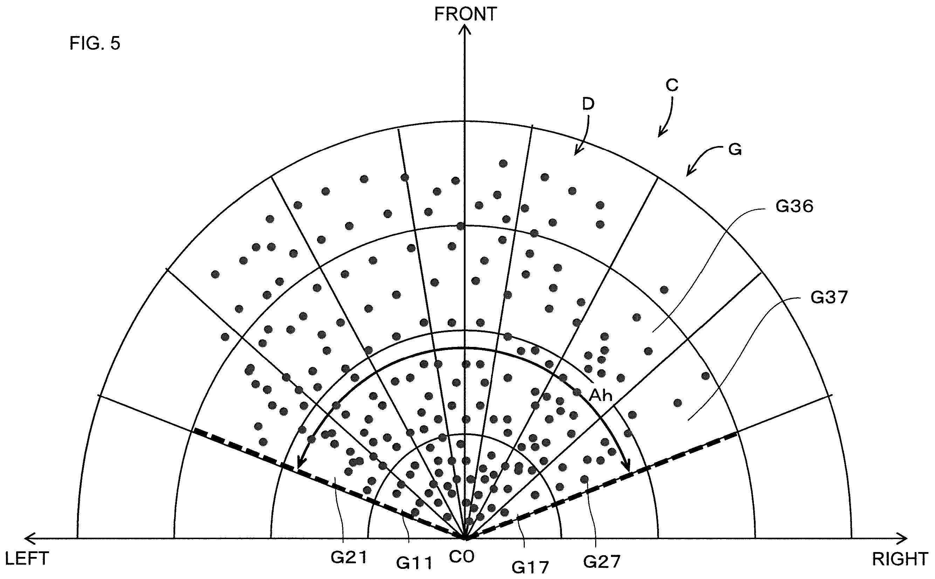

The surrounding information obtaining portion 53 is an obtaining portion which obtains the information around the electric wheel chair 1 as the three-dimensionally indicated point group data from the detecting device 40. The dividing portion 54 divides the point group data D obtained by the surrounding information obtaining portion 53 into a plurality of sections G which is a plurality of predetermined areas defined on a predetermined plane. According to this embodiment, the plurality of predetermined areas is defined on a circle coordinates C (plane polar coordinates) as shown in Fig. 5. The circle coordinates C is provided on the predetermined plane and is a polar coordinates having the position of the detecting portion 41 of the detecting device 40 as the origin C0 and the upper side in Fig. 5 being the front direction of the electric wheel chair 1. The circle coordinates C includes the plurality of sections G which is provided with a predetermined interval spaced from one another in a radial direction and a predetermined degree separated from one another in a circumferential direction (for example, 50 cm in a radial direction and 20 degrees in a circumferential direction). The predetermined plane is set to be in parallel with the horizontal plane when the electric wheelchair 1 is travelling on a road with the horizontal plane surface and is defined to be the reference plane including the detecting portion 41.

It is noted here that the origin C0 of the circle coordinates C may be set to the center of gravity of the electric wheel chair 1 instead of setting at the position of the detecting portion 41 of the detecting device 40. Further, the rows and columns of the divided sections Gnm are defined such that a column (row) closest to the detecting portion 41 in a radial direction is assumed to be the first row and a column at the left side in a circumferential direction is assumed to be the first column. The symbol "n" indicates the row number, whereas the symbol "m" indicates the column number. The section G11 means the section defined by the first row and the first column. The section G17 means the section defined by the first row and the seventh column. The section G21 means the section defined by the second row and the first column and the section G27 means the section defined by the second row and the seventh column.

The dividing portion 54 divides the point group data D obtained by the surrounding information obtaining portion 53 into the plurality of sections G as described above. In more detail, the dividing portion 54 divides the point group data D into the plurality of sections G by projecting the point group data D on the circle coordinates C. The reference position of the point group data D is the position of the detecting portion 1 and accordingly, by agreeing the reference position to the origin C0 of the circle coordinates C, the point group data D can be projected on the circle coordinates C by the dividing portion 54. It is noted that the dividing portion 54 can divide the point group data D by using the plane orthogonal coordinates (i.e., using grids), instead of using the circle coordinates C.

The feature amount calculating portion 55 calculates the feature amount associated with the feature of the section Gnm from the divided point group data Dnm which is the point group data D that belongs to the section Gnm. This calculation is made per every divided section Gnm divided by the dividing portion 54. In more detail, the feature amount calculating portion 55 includes a merging portion 55a, a presumed plane setting portion 55b, an identifying portion 55c, a normal vector calculating portion 55d, an inclination calculating portion 55e and a height calculating portion 55f.

The merging portion 55a merges the section Gnm in which the number of divided point group data Dnm is relatively small and a neighboring section Gnm which is located adjacent thereto thereby forming a new section which is a merged section newly formed by merging. For example, the section G37 in which the number of divided point group data is small merges the neighboring section G36 which is located adjacent to the section G37 to form a merged new section. This merged new section becomes the section subject to further processing or treatment. By this merging, the number of vacant sections in which the number of point group data is relatively small can be reduced.

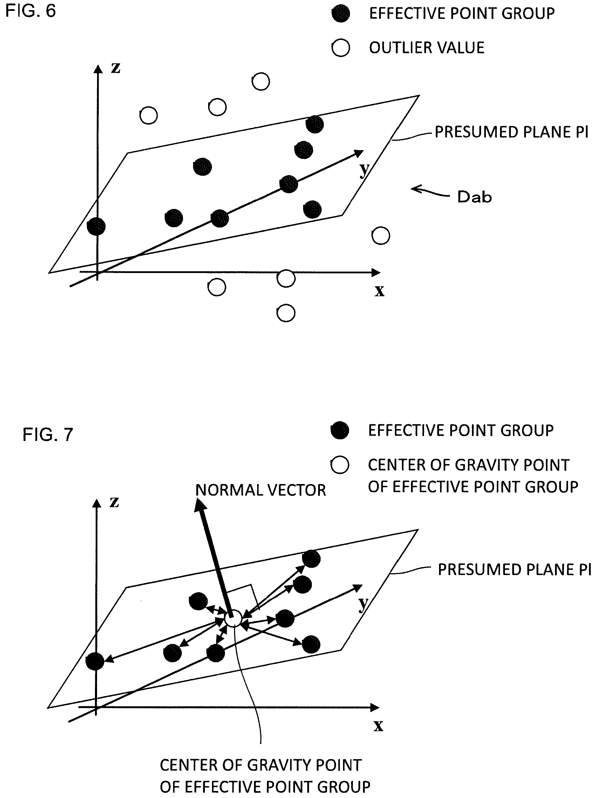

The presumed plane setting portion 55b sets the presumed plane PI from the divided point group data Dnm associated with the section Gnm per every section Gnm (See Fig. 6). The presumed plane PI is a flat plane and can be set by conducting RANSAC method or Moving Least Squares method on the divided point group data "Dab".

The identifying portion 55c identifies the effective point group data D and the outlier values from the divided point group data Dnm based on the presumed plane PI set by the presumed plane setting portion 55b. In more detail, the identifying portion 55c identifies a dot located at a position where the distance shortest from the presumed plane PI is smaller than a distance threshold value, as an effective data (See black dots in Fig. 6) and identifies a white circle located at a position where the distance shortest from the presumed plane PI is larger than the distance threshold value as an outlier value (See white circle in Fig. 6). It is noted that the divided point group data Dnm in Fig. 6 indicates a certain divided point group data Dab.

The normal vector calculating portion 55d calculates the normal vector of the section Gnm from the effective point group data D identified by the identifying portion 55c. In more detail, the normal vector calculating portion 55d calculates the point of center of gravity (or the median) to the identified point group data D (black dots indicated in Fig. 7) and then the normal vector calculating portion 55d calculates the covariance matrix with the effective point group data D relative to the calculated point of center of gravity (shown with the white circle) to thereby conduct a principal component analysis. The normal vector calculating portion 55d sets the minimum principal component as the normal vector of the presumed plane PI. It is noted that it is preferable to calculate the covariance matrix after weighting the covariance of the center of gravity and the point group in response to the distance therebetween. Then, the influence by the noise can be minimized and the normal vector can be more accurately calculated.

The inclination calculating portion 55e calculates the inclination (angle relative to the horizon plane) which is one of the feature amounts of the section Gnm from the normal vector calculated by the normal vector calculating portion 55d. Since the direction of the normal vector and the plane surface of the section Gnm are in an orthogonal relation, the inclination of the section Gnm can be calculated from the direction of the normal vector. In more detail, the inclination calculating portion 55e calculates the inclination of the section Gnm by the inner product of the vertical upward direction vector and normal vector. The inclination becomes positive value when the inclination inclines to the near side of the travelling direction (upward inclination) relative to the horizon plane and becomes a negative value when the inclination inclines far side of the travelling direction (downward inclination) relative to the horizon plane.

The height calculating portion 55f calculates the height which is one of the feature amounts of the section Gnm based on the effective point group data D which is identified by the identifying portion 55c. In detail, the height calculating portion 55f calculates for example, the mean value or the median of the identified effective point group data D as the height of the section Gnm. The height value becomes a positive value when the height is higher than the reference plane and becomes a negative value when the height is lower than the reference plane. It is noted that the reference plane is for example, set to be a horizontal plane and is the plane on which the wheels of the electric wheel chair 1 are ground-contacted under a parallel (horizontal) state.

The search starting point setting portion 56 sets the search starting point which is the starting point for searching a travelable section, where the electric wheel chair 1 can travel, from the plurality of sections based on the feature amount calculated by the feature amount calculating portion 55. In detail, the search starting point setting portion 56 sets a section as a search starting point where the section is positioned within a predetermined distance from the present position of the electric wheel chair 1, the height that belongs to the feature amount calculated by the feature amount calculating portion 55 is within a height judging range and further the inclination which belongs to the feature amount calculated by the feature amount calculating portion 55 is within an inclination detectible range from the plurality of sections G. It is noted that the height judging range is set to be equal to or more than the first height threshold value and at the same time is set to be equal to or less than the second height threshold value which is larger than the first height threshold value. The first height threshold value is, for example, set to correspond to the depth of the road (recessed step) where the electric wheel chair 1 can travel over and is indicated as a negative value. The second height threshold value is, for example, set to correspond to the height of road (projecting step) where the electric wheel chair 1 can travel over and is indicated as a positive value. It is further noted that the inclination detectible range is set to be equal to or more than the first inclination threshold value and at the same time is set to be equal to or less than the second inclination threshold value which is larger than the first inclination threshold value. Further, the inclination judging range is set to be equal to or more than the first inclination threshold value and at the same time is set to be equal to or less than the second inclination threshold value which is larger than the first inclination threshold value. The first inclination threshold value is, for example, set to correspond to the angle of the downhill road where the electric wheel chair 1 can travel over and is indicated as a negative value. The second inclination threshold value is, for example, set to correspond to the angle of the uphill road where the electric wheel chair 1 can travel over and is indicated as a positive value. For example, it is preferable that the search starting point setting portion 56 sets a section as a search starting point where the section is positioned within a predetermined distance from the present position of the electric wheel chair 1, the height that belongs to the feature amount calculated by the feature amount calculating portion 55 is equal to or less than the second height threshold value (and equal to or more than zero) and further the inclination which belongs to the feature amount calculated by the feature amount calculating portion 55 is equal to or less than the second inclination threshold value (and equal to or more than zero).

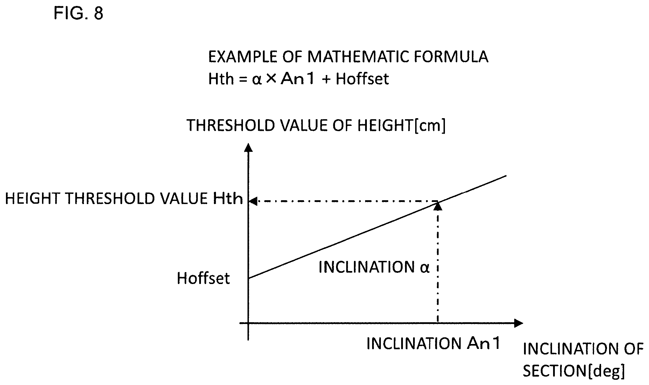

The height threshold value explained above is set in response to the inclination calculated by the feature amount calculating portion 55. In detail, the height threshold value Hth can be calculated as a value corresponding to the inclination An1 (road surface angle) of the section G from the map shown in Fig. 8 or the following mathematic formula 1 (M1).

$$(M1)$$

$$Hth = \alpha \times An1 + Hoffset$$

wherein "$\alpha$" is a coefficient which is used for converting the angle of the road surface into the height (height threshold value Hth) and is a constant specific to the electric wheel chair 1. The "Hoffset" is an offset term and is set to the upper limit value of the step on which the electric wheel 1 can travel over (this value determines the travelable range when the angle of the road surface is in a vertically upward direction).

According to this structure, the height threshold value which detects the search starting point can be variable depending on the inclination (angle) of the section (road surface). As a result, as long as the inclination is within the travelable range, even the step has the height higher than the travelable height, the section can be set as the travelable search starting point. Therefore, the travelable section can be correctly detected (judged).

The judging portion 57 judges whether or not a section is a resembling section which has a feature amount closer to the feature amount associated with the search starting point among from the surrounding sections which correspond to the plurality of sections surrounding the search starting point (for example, sections neighboring to the search starting point) set by the search starting point setting portion 56. In other words, the judging portion 57 judges whether or not a section is travelable for the electric wheel chair 1 judging from all sections Gnm.

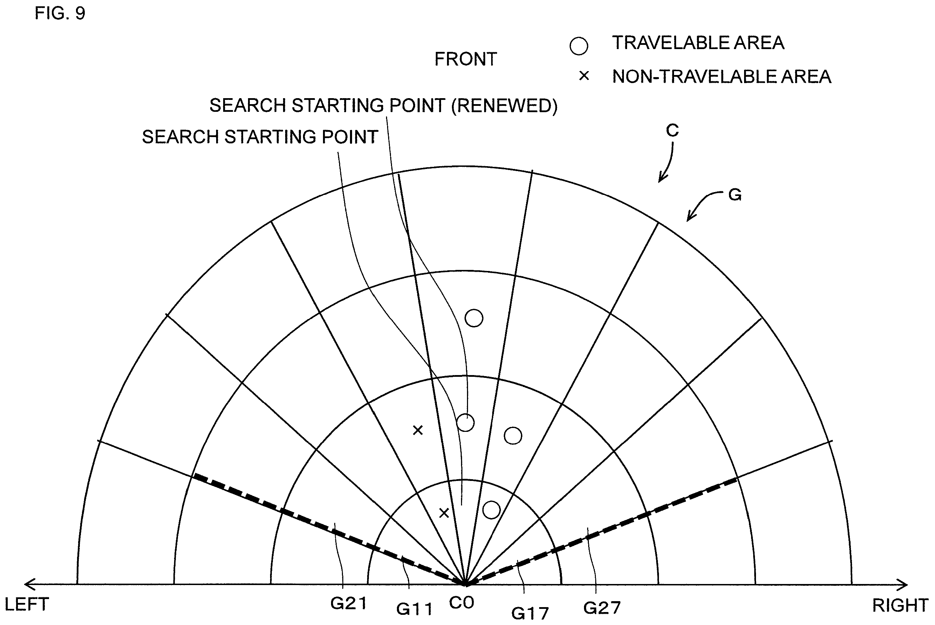

In other words, the judging portion 57 judges whether or not the section surrounding the search starting point is a resembling section, or judges whether the section is travelable or not, by judging whether or not the difference in feature amount between the search starting point and the surrounding section is continuous. When the difference in the feature amount between the search starting point and the surrounding section is judged to be continuous, the judging portion 57 judges that the search starting point and the surrounding section are the resembling sections with each other and that the surrounding section is travelable. On the other hand, when the difference in the feature amount between the search starting point and the surrounding section is judged not to be continuous, the judging portion 57 judges that the search starting point and the surrounding section are not the resembling sections with each other and that the surrounding section is not travelable. As shown in Fig. 9, the section with the X mark is not travelable by the electric wheel chair 1 and the section with O mark is travelable by the electric wheel chair 1. The surrounding sections are located neighboring with each other in vertical and horizontal directions and do not include the sections neighboring in oblique directions. However, it is possible to include such sections neighboring in oblique directions.

A detail judging method whether a section is resembling or not will be explained as follows. Regarding to the height which is one of the feature amounts, when the height difference between the search starting point and a surrounding section is smaller than the first threshold value, the height difference is judged to be continuous between the search starting point and the surrounding section and therefore the surrounding section resembles with the search starting point. On the other hand, when the height difference between the search starting point and a surrounding section is larger than the first threshold value, the height difference is judged to be not continuous between the search starting point and the surrounding section and therefore the surrounding section does not resemble with the search starting point.

Further, regarding to the inclination which is another one of the feature amounts, when the inclination difference between the search starting point and a surrounding section is smaller than the second threshold value, the inclination difference is judged to be continuous between the search starting point and the surrounding section and therefore the surrounding section resembles with the search starting point. On the other hand, when the inclination difference between the search starting point and a surrounding section is larger than the second threshold value, the inclination difference is judged not to be continuous between the search starting point and the surrounding section and therefore the surrounding section does not resemble with the search starting point. As explained, when both of the height and the inclination which are associated with the feature amounts are continuous, the search starting point and the surrounding section and therefore the surrounding section resembles with the search starting point. Other than that, the search starting point and the surrounding section and therefore the surrounding section do not resemble with each other.

Further, the judging portion 57 sets (renews) a new search starting point which resembles most to the search starting point from the resembling sections and judges or determines a new resembling section based on the renewed search starting point. The judging portion 57 repeatedly executes the renewal of the judgment of the resembling section and the search starting point. If no resembling section is found (no renewal of the search starting point can be executed), the judging portion 57 sets another search starting point similar to the setting by the search starting point setting portion 56. Further, the judging portion 57 (control device 50) memorizes the section which has been judged to be the resembling section by the judging portion 57 in the memory portion. Further, the judging portion 57 sends the judgment result to the driving control portion 52. The driving control portion 52 controls the travelling of the electric wheel chair 1 based on the judgement result from the judging portion 57, or based on the judgement whether the section where the electric wheel chair 1 is travelling is a travelable section or non-travelable section.

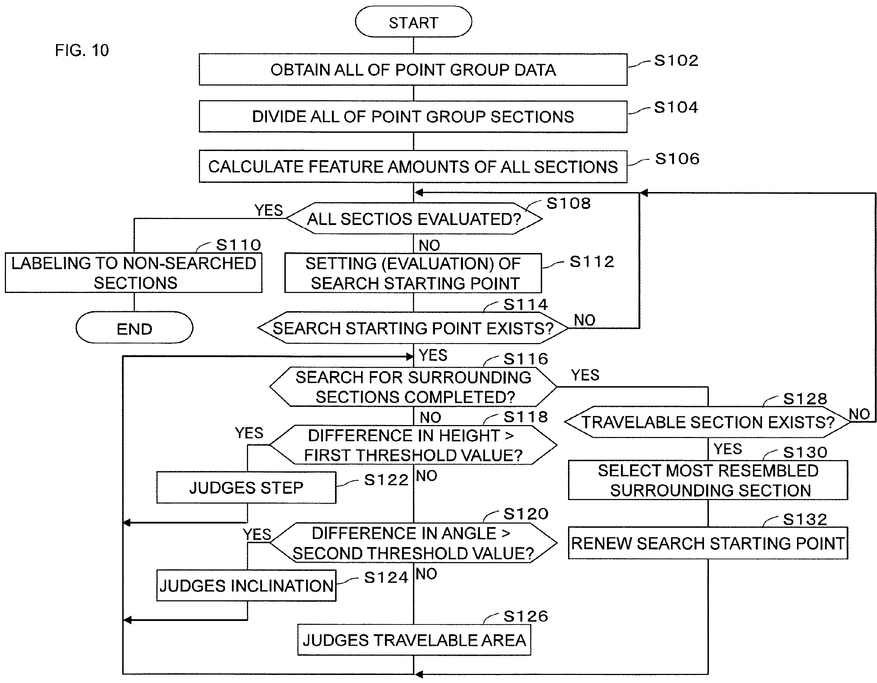

The control of operation of the mobile body, particularly the control of the mobile body on judgment whether the mobile body is in a travelable section or not will be explained with reference to the flowchart shown in Fig. 10. The control device 50 executes the program based on the flowchart.

The control device 50 obtains the surrounding information of the electric wheel chair 1 from the detecting device 40 as the point group data D, as similar to the surrounding information obtaining portion 53 as described above at the step S102. At the step S104, the control device 50 divides all of the point group data D obtained by the surrounding information obtaining portion 53 into the plurality of sections G which is a plurality of predetermined areas defined on a predetermined plane, as similar to the dividing portion 54 as described above.

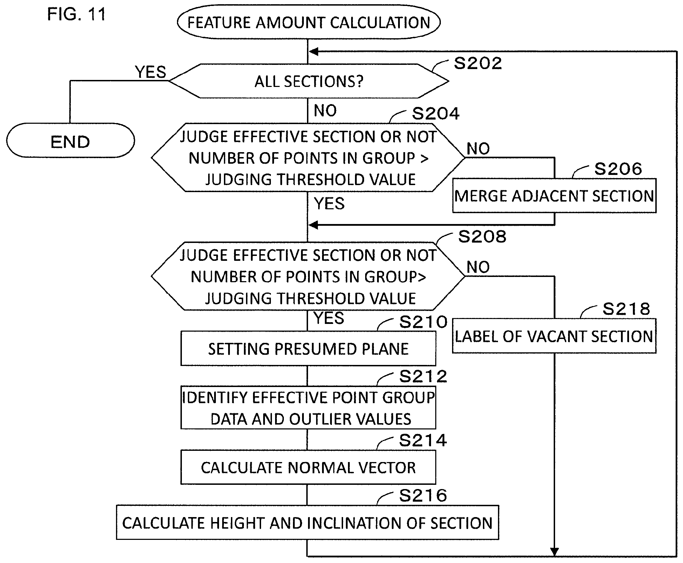

At the step S106, similar to the calculation by the feature amount calculating portion 55 as described above, the control device 50 calculates the feature amount associated with the feature of the section Gnm from the divided point group data Dnm which is the point group data D that belongs to the section Gnm. This calculation is made per every divided section Gnm divided by the dividing portion 54. In more detail, the control device 50 executes the program of flowchart shown in Fig. 11 as a sub-routine.

The control device 60 judges whether all sections G are processed or not at the step S202. When all of the sections G are processed, the control device 50 terminates the execution of the sub-routine and when the processing of all sections G is not finished, the program goes to the step S204. The control device 50 judges whether the section G is an effective section or not by judging whether the number of belonging point group is greater than a judging threshold value or not at the step S204.

At the step S206, similar to the merging of the merging portion 55a as described above, the control device 50 merges the section Gnm in which the number of divided point group data Dnm is relatively small and a neighboring section Gnm which is located adjacent thereto thereby forming a new section which is a merged section by merging. At the step S208, the control device 50, similar to the judgement at the step S204, judges whether the merged section is an effective section or not.

When the section (merged section) is judged to be an effective section, the control device 50 calculates the feature amount of the section (in detail, the height and the inclination) at the step S210 and thereafter. On the other hand, when section (merged section) is judged to be not an effective section, the control device 50 labels the section as a vacant section and memorizes that the section is a vacant section at the step S218.

At the step S210, similar to the presumed plane setting portion 55b, the control device 50 sets the presumed plane PI from the divided point group data Dnm associated with the section Gnm per every section Gnm. At the step S212, similar to the identifying portion 55c as described above, the control device 50 identifies the effective point group data D and the outlier values from the divided point group data Dnm, based on the presumed plane PI set at the step S210. At the step S214, similar to the normal vector calculating portion 55d as described above, the control device 50 calculates the normal vector of the section Gnm from the effective point group data D identified at the step S212. At the step S216, similar to the inclination calculating portion 55e as described above, the control device 50 calculates the inclination which is one of the feature amounts of the section Gnm from the normal vector calculated at the step S214 and at the same time similar to the height calculating portion 55f, calculates the height which is one of the feature amounts of the section Gnm from the effective point group data D identified at the step S212.

At the step S108, the control device 50 judges whether or not the evaluation (judgement, search) on whether or not the section is travelable to all of the sections G is finished. When the evaluation has been finished to all of the sections G, the program goes to the step S110 and thereafter. When the evaluation is not finished to all of the sections G, the program goes to the step S112 and thereafter. At the step S110, the control device 50 applies label to the section where no label is applied, i.e., the section where no search (evaluation) has not been conducted that the section is a non-searched section and memorizes the section as non-searched section. The non-searched section is a section neither the travelable section or the non-travelable section (stepped section, inclination section).

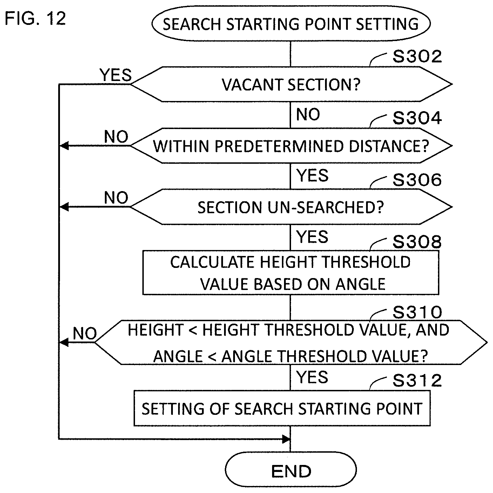

At the step S112, similar to the search starting point setting portion 56 as described above, the control device 50 sets the search starting point which is a starting point for searching a section whether the section is travelable by the electric wheel chair 1 from the plurality of sections, based on the feature amount calculated at the step S106. In detail, the control device 50 executes the program of the flowchart shown in Fig. 12, as a sub-routine.

At the step S302, the control device 50 judges whether the section is a vacant section or not. When the section is a vacant section, the control device 50 finishes the sub-routine and when the section is not a vacant section, advancers the program to the step S304. At the step S304, the control device 50 judges whether the section is located within a predetermined distance from the present position of the electric wheel chair 1 or not. If the distance is located further than the predetermined distance, the control device 50 finishes the sub-routine and if the distance is within the predetermined distance, advances the program to the step S306.

At the step S306, the control device 50 judges whether the section is searched or not searched. When the section has been searched, the control device finishes the sub-routine and when the section has not been searched advances the program to the step S308. At the step S308, the control device 50 calculates the height threshold value (or the height judging range) based on the inclination.

At the step S310, the control device 50 judges whether the section can be a search starting point or not. In detail, when the height of the section is within the height judging range, (for example, smaller than the second height threshold value) and yet the inclination of the section is within the inclination judging range (for example, smaller than the second inclination threshold value), the control device 50 judges that the section can be a search starting point. In a case other than the case described above, the control device 50 judges that the section cannot be a search starting point. The control device 50 finishes the program when the section could not be a search starting point and advances the program to the step S312 when the section is judged to be a search starting point and sets the section as the search starting point.

At the step S114, the control device 50 judges whether a search starting point exists or not. When the control device 50 judges that there exists no search starting point (search starting point is not set), the program returns to the step S108 and when the control device 50 judges that there exists a search starting point (search starting point is set), advances the program to the step s116 and thereafter.

At the step S116 and thereafter, similar to the judging portion 57 as described above, the control device 50 judges a resembling section which has a feature amount close to the feature amount associated with the feature of the search starting point among the surrounding sections which surround the search starting point set at the step S112. In other words, the control device 50 judges whether a section is travelable by the electric wheel chair 1 or not to all of the sections Gnm.

At the step S116, the control device 50 judges whether the judgement (search) for the surrounding sections has been finished or not. When the judgement (search) for the surrounding sections has not been finished, the control device 50 advances the program to the step S118 and thereafter but on the other hand, when the judgement (search) for the surrounding sections has been finished, the control device 50 advances the program to the step S128 and thereafter.

At the steps S118 through S126, the control device 50 judges whether a section where a search has not been made resembles with the search starting point or not. When the difference in height between the search starting point and the section that has not been searched is smaller than a first threshold value (at the step S118: NO), and yet the difference in inclination between the search starting point and the section that has not been searched is smaller than a second threshold value (at the step S120: NO), the control device 50 judges that the difference in feature amount is continuous and that the search starting point and the section that has not been searched resemble with each other to thereby judge that the section is travelable by the electric wheel chair 1 (at the step S126). When the difference in height between the search starting point and the section is larger than the first threshold value (at the step S118: YES), the control device 50 judges that the difference in feature amount (height) is not continuous and the search starting point and the section do not resemble with each other, thereby to judge that the section is a non-travelable section with a large step (large step difference area) (at the step S122). When the difference in height between the search starting point and the section is smaller than the first threshold value (at the step S118: NO) and yet the difference in inclination between the search starting point and the section is larger than the second threshold value (at the step S120: YES), the control device 50 judges that the difference in the feature amount (inclination) is not continuous and that the search starting point and the section do not resemble with each other, to thereby judge that the section is a non-travelable section with a large inclination (steep slope area) (at the step S124).

At the step S128, the control device 50 judges whether or not a travelable section (resembling section) exists. When any travelable section does not exist, the control device 50 returns the program to the step S108 and when the travelable section exists, the control device 50 advances the program to the step S130. At the step S130, the control device 50 selects the resembling section which resembles most with the search starting point from the plurality of resembling sections and at the step S132, sets (renews) the selected section as a new search starting point. Then, the control device 50 returns the program to the step S116 to judge a new resembling section based on the renewed search starting point.

As apparent from the explanation above, the electric wheel chair 1 (mobile body) is a mobile body which travels driven by the driving device 20. The electric wheel chair 1 includes a surrounding information obtaining portion 53 (obtaining portion) which obtains information of surrounding of the electric wheel chair 1 as a three-dimensionally indicated point group data, a dividing portion 54 which divides the point group data obtained by the surrounding information obtaining portion 53 into a plurality of sections G which is a plurality of predetermined areas defined on a predetermined plane, a feature amount calculating portion 55 which calculates a feature amount which is associated with a feature of one of the plurality of sections G from a divided point group data which is the point group data belonging to the one of the plurality of sections G per every section divided by the dividing portion 54, a search starting point setting portion 56 which sets a search starting point which serves as a starting point for searching whether there is a travelable section in which the electric wheel chair 1 is travelable among the plurality of sections G based on the feature amount calculated by the feature amount calculating portion 55 and a judging portion 57 which judges a resembling section which includes a feature amount resembling the feature amount associated with the search starting point from among a surrounding section G, which is one of the plurality of the sections surrounding the search starting point set by the search starting point setting portion 56.

According to the embodiment as described above, a resembling section can be judged based on the feature amount calculated per every section G, referencing the search starting point among the sections G surrounding the search starting point which has been set previously. In other words, the travelable section of the electric wheel chair 1 can be judged based on the search starting point as a reference point. As a result, an electric wheel chair 1 which more accurately recognizes a step or an inclination of a road surface on which the electric wheel chair 1 travels, by suppressing an influence from a shape of the road surface on which the electric wheel chair 1 travels can be proposed.

Further, since the section which is judged to be travelable (search starting point) as the base of the comparison and the surrounding section surrounding the search starting point are judged to be resembled with each other or not, even the posture of the electric wheel chair 1 or the detecting device 40 is changed, the correlative relationship between the sections are not changed. Accordingly, an influence from the disturbance due to the posture change of the electric wheel chair 1 or the detecting device 40 when travelling on an inclined road surface or an odd-even road surface can be suppressed. As a result, the electric wheel chair 1 can recognize more accurately the steps or the inclination of the road surface where the electric wheel chair 1 travels.

Further, the feature amount calculating portion 55 includes a presumed plane setting portion 55b which sets the presumed plane PI from the divided point group data D associated with the section G per every section G, an identifying portion 55c which identifies the effective point group data and the outlier value from the divided point group data based on the presumed plane PI set by the presumed plane setting portion 55b, a normal vector calculating portion 55d which calculates the normal vector of the section G from the point group data identified by the identifying portion 55c, an inclination calculating portion 55e which calculates the inclination which is one of the feature amounts of the section G from the normal vector calculated by the normal vector calculating portion 55d and a height calculating portion 55f which calculates the height which is one of the feature amounts of the section G from the effective point group data identified by the identifying portion 55c. According to this structure, the feature amount (height and inclination) associated with the section G can be accurately calculated per every section. As a result, the step or the inclination (steep slope) of the travelling road surface of the electric wheel chair 1 can be accurately recognized. Further, even under travelling on an odd-even road surface or a road with a big noise the normal vector of the section can be accurately calculated. Therefore, the electric wheel chair 1 can accurately recognize the travelable section and accordingly, can enlarge the section of travelling.

The feature amount calculating portion 55 further includes a merging portion 55a which merges the section G in which the number of divided point group data is relatively small and a neighboring section G which is located adjacent thereto thereby forming a new section G which is a merged section by merging. The height and the inclination of the merged section merged by the merging portion 55a are calculated. According to the structure above, by merging the section G which number of divided point group data is relatively small and the neighboring section G, the number of measuring points can be increased to accurately calculate the feature amount associated with the section G. As a result, the electric wheel chair 1 can more accurately recognize the step or the inclination of the road surface on which the electric wheel chair 1 travels.

Further, the search starting point setting portion 56 sets a section G as a search starting point where the section G is positioned within a predetermined distance from the present position of the electric wheel chair 1, the section has the height that belongs to the feature amount calculated by the feature amount calculating portion 55 and that is within the height judging range and further the section G has the inclination that belongs to the feature amount calculated by the feature amount calculating portion 55 and that is within the inclination judging range. Thus, the search starting point can be accurately set and as a result, the electric wheel chair 1 can more accurately recognize the step or the inclination of the road surface on which the electric wheel chair 1 travels.

Further, the height judging range (each height threshold value) is set in response to the inclination calculated by the feature amount calculating portion 55. According to this structure, the search starting point can be more accurately set and as a result, the electric wheel chair 1 can more accurately recognize the step or the inclination of the road surface on which the electric wheel chair 1 travels. Accordingly, the electric wheel chair 1 can more accurately recognize the gradual slope that can be traveled, and can enlarge the section of travelling thereby to improve convenience.

According to the embodiments above, upon setting the search starting point, feature amounts (such as, height information and inclination information) are calculated per every section from the divided point group data obtained from the point group data and based on the feature amounts, the search starting point is set. In this invention, the following structure may be applicable which is:

(appended item 1)

The search starting point setting portion calculates (corrects) the feature amounts (for example, height information and inclination information) based on the information from another sensor (such as, an acceleration sensor) and the search starting point may be set based on the feature amounts calculated thereby. In this case, the accuracy of the calculated feature amount is improved to more properly and accurately set the search starting point.

[Brief Explanation of Symbols and Signs]

1; electric wheel chair (mobile body), 10; wheel chair main body, 20; driving device, 30; operating device, 40; detecting device, 41; detecting portion, 50; control device, 51; operation information obtaining portion, 52; driving control portion, 53; surrounding information obtaining portion, 54; dividing portion, 55; feature amount calculating portion, 55a; merging portion, 55b; presumed plane setting portion, 55c; identifying portion, 55d; normal vector calculating portion, 55e; inclination calculating portion, 55f; height calculating portion, 56; search starting point setting portion, 57; judging portion, D; point group data, G; section (grid).

**Claims**

1. A mobile body (1) comprising:

   a driving device (20) configured to drive the mobile body (1) for travelling;
   an obtaining portion (53) configured to obtain three-dimensional coordinates associated with a detected object located around the mobile body from a detecting device (40) as three-dimensionally indicated point group data;
   a dividing portion (54) configured to project the point group data on a predetermined plane including a plurality of sections (G), which is a plurality of predetermined areas, and an origin (C0) that is a reference position of the point group data, and to divide the point group data into a divided point group data (Dnm) by associating the point group data whose projections lie in each section (Gnm) with the each section (Gnm);
   a feature amount calculating portion (55) configured to calculate a feature amount of the each section (Gnm) from the divided point group data (Dnm);
   a search starting point setting portion (56) configured to set one of the sections (Gnm) which is travelable by the mobile body (1) as a search starting point based on the feature amount calculated by the feature amount calculating portion (55);
   a judging portion (57) configured to judge whether one of the plurality of sections (Gnm) surrounding the search starting point set by the search starting point setting portion (56) has a feature amount resembling the feature amount of the search starting point and is travelable by the mobile body (1); and
   a driving control portion (52) configured to control the driving device (20) for travelling the mobile body (1) based on the judgement result from the judging portion (57).

2. The mobile body according to claim 1, wherein the feature amount calculating portion comprises:

   a presumed plane setting portion (55b) configured to set a presumed plane from the divided point group data associated with the section per every section;
   an identifying portion (55c) configured to identify an effective point group data and an outlier value from the divided point group data based on the presumed plane set by the presumed plane setting portion;
   a normal vector calculating portion (55d) configured to calculate a normal vector of the section from the point group data identified by the identifying portion;
   an inclination calculating portion (55e) which calculates an inclination which is one of the feature amounts of the section from the normal vector calculated by the normal vector calculating portion; and
   a height calculating portion (55f) configured to calculate a height which is another one of the feature amounts of the section (G) from the effective point group data identified by the identifying portion.

3. The mobile body according to claim 2, wherein the feature amount calculating portion further comprises a merging portion (55a) configured to merge a section in which a number of divided point group data is relatively small and a neighboring section which is located adjacent thereto, thereby forming a new section which is a merged section by merging, wherein a height and an inclination of the merged section merged by the merging portion are calculated.

4. The mobile body according to any one of claims 1 to 3, wherein the search starting point setting portion (56) is configured to set a section (G) as the search starting point where the section is positioned within a predetermined distance from a present position of the mobile body, the section has the height that belongs to the feature amount calculated by the feature amount calculating portion and that is within a height judging range and further the section has the inclination that belongs to the feature amount calculated by the feature amount calculating portion and that is within an inclination judging range.

5. The mobile body according to claim 4, wherein the height judging range is set in response to the inclination calculated by the feature amount calculating portion (55).

6. The mobile body according to any one of claims 1 to 5,

wherein the feature amount calculating portion (55) is configured to calculate the feature amount of the each section (Gnm) comprising inclination and height of the each section (Gnm), and

wherein the judging portion (57) is configured to judge a difference in height between the search starting point and the each section (Gnm), and a difference in inclination between the search starting point and the each section (Gnm).

7. The mobile body according to any one of claims 1 to 6, wherein the judging portion (57) renews the search starting point by the one of the plurality of sections (Gnm) surrounding the last search starting point whose feature amount resembles most to the last search starting point, and repeatedly judges the section surrounding the renewed search starting point.

**Patentansprüche**

1. Mobiler Körper (1) mit:

einer Antriebsvorrichtung (20), die zum Antreiben des mobilen Körpers (1) zur Fortbewegung ausgebildet ist;

einem Erhalteteil (53), der zum Erhalten von dreidimensionalen Koordinaten, die einem detektierten Objekt, das sich um den mobilen Körper befindet, zugeordnet sind, von einer Detektiervorrichtung (40) als dreidimensional angegebene Punktgruppendaten ausgebildet ist;

einem Aufteilteil (54), der zum Projizieren der Punktgruppendaten auf eine vorbestimmte Ebene, die mehrere Abschnitte (G), die mehrere vorbestimmte Bereiche sind, und einen Ursprung (C0), der eine Referenzposition der Punktgruppendaten ist, enthält, und zum Aufteilen der Punktgruppendaten in aufgeteilte Punktgruppendaten (Dnm) durch Zuordnen der Punktgruppendaten, deren Projektionen in einem jeweiligen Abschnitt (Gnm) liegen, zu dem jeweiligen Abschnitt (Gnm) ausgebildet ist;

einem Merkmalsbetragsberechnungsteil (55), der zum Berechnen eines Merkmalsbetrags des jeweiligen Abschnitts (Gnm) anhand der aufgeteilten Punktgruppendaten (Dnm) ausgebildet ist;

einem Suchstartpunkteinstellteil (56), der zum Einstellen eines der Abschnitte (Gnm), in dem sich der mobile Körper (1) fortbewegen kann, als einen Suchstartpunkt basierend auf dem Merkmalsausmaß, das durch den Merkmalsbetragsberechnungsteil (55) berechnet wird, ausgebildet ist;

einem Beurteilungsteil (57), der dazu ausgebildet ist, zu beurteilen, ob einer der mehreren Abschnitte (Gnm), die den Suchstartpunkt, der durch den Suchstartpunkteinstellteil (56) eingestellt wird, umgeben, einen Merkmalsbetrag, der dem Merkmalsbetrag des Suchstartpunkts ähnelt, aufweist und ein Abschnitt ist, in dem sich der mobile Körper (1) fortbewegen kann; und

einem Antriebssteuerteil (52), der zum Steuern der Antriebsvorrichtung (20) zur Fortbewegung des mobilen Körpers (1) basierend auf dem Beurteilungsergebnis von dem Beurteilungsteil (57) ausgebildet ist.

2. Mobiler Körper nach Anspruch 1, bei dem der Merkmalsbetragsberechnungsteil aufweist:

einen Angenommene-Ebene-Einstellteil (55b), der zum Einstellen einer angenommenen Ebene anhand der aufgeteilten Punktgruppendaten, die dem Abschnitt zugeordnet sind, für jeden Abschnitt ausgebildet ist;

einen Identifizierteil (55c), der zum Identifizieren von effektiven Punktgruppendaten und eines Ausreißerwerts der aufgeteilten Punktgruppendaten basierend auf der angenommenen Ebene, die durch den Angenommene-Ebene-Einstellteil eingestellt wird, ausgebildet ist;

einen Normalenvektorberechnungsteil (55d), der zum Berechnen eines Normalenvektors des Abschnitts anhand der Punktgruppendaten, die durch den Identifizierteil identifiziert werden, ausgebildet ist;

einen Neigungsberechnungsteil (55e), der eine Neigung, die einer der Merkmalsbeträge des Abschnitts ist, anhand des Normalenvektors, der durch den Normalenvektorberechnungsteil berechnet wird, berechnet; und

einen Höhenberechnungsteil (55f), der zum Berechnen einer Höhe, die ein anderer der Merkmalsbeträge des Abschnitts (G) ist, anhand der effektiven Punktgruppendaten, die durch den Identifizierteil identifiziert werden, ausgebildet

**3.** Mobiler Körper nach Anspruch 2, bei dem der Merkmalsbetragsberechnungsteil ferner einen Zusammenfügteil (55a) aufweist, der zum Zusammenfügen eines Abschnitts, in dem eine Anzahl von aufgeteilten Punktgruppendaten relativ klein ist, und eines benachbarten Abschnitts, der dazu benachbart ist, zum Ausbilden eines neuen Abschnitts, der ein zusammengefügter Abschnitt ist, durch Zusammenfügen ausgebildet ist,
bei dem eine Höhe und eine Neigung des zusammengefügten Abschnitts, der durch den Zusammenfügteil zusammengefügt wird, berechnet werden.

**4.** Mobiler Körper nach einem der Ansprüche 1 bis 3, bei dem
der Suchstartpunkteinstellteil (56) dazu ausgebildet ist, einen Abschnitt (G) als den Suchstartpunkt einzustellen, in dem der Abschnitt innerhalb eines vorbestimmten Abstands von einer aktuellen Position des mobilen Körpers positioniert ist, wobei der Abschnitt die Höhe aufweist, die zu dem Merkmalsbetrag gehört, der durch den Merkmalsbetragsberechnungsteil berechnet wird, und die innerhalb eines Höhenbeurteilungsbereichs liegt, und der Abschnitt ferner die Neigung aufweist, die zu dem Merkmalsbetrag gehört, der durch den Merkmalsbetragsberechnungsteil berechnet wird, und die in einem Neigungsbeurteilungsbereich liegt.

**5.** Mobiler Körper nach Anspruch 4, bei dem der Höhenbeurteilungsbereich ansprechend auf die Neigung, die durch den Merkmalsbetragsberechnungsteil (55) berechnet wird, eingestellt wird.

**6.** Mobiler Körper nach einem der Ansprüche 1 bis 5,

bei dem der Merkmalsbetragsberechnungsteil (55) dazu ausgebildet ist, den Merkmalsbetrag des jeweiligen Abschnitts (Gnm), der eine Neigung und eine Höhe des jeweiligen Abschnitts (Gnm) aufweist, zu berechnen, und
bei dem der Beurteilungsteil (57) dazu ausgebildet ist, einen Höhenunterschied zwischen dem Suchstartpunkt und dem jeweiligen Abschnitt (Gnm) und einen Neigungsunterschied zwischen dem Suchstartpunkt und dem jeweiligen Abschnitt (Gnm) zu beurteilen.

**7.** Mobiler Körper nach einem Ansprüche 1 bis 6, bei dem der Beurteilungsteil (57) den Suchstartpunkt durch den einen der mehreren Abschnitte (Gnm), die den letzten Suchstartpunkt umgeben, ersetzt, dessen Merkmalsbetrag am ähnlichsten zu dem letzten Suchstartpunkt ist, und den Abschnitt, der den neuen Suchstartpunkt umgibt, wiederholt beurteilt.

**Revendications**

**1.** Corps mobile (1) comprenant :

un dispositif d'entraînement (20) configuré pour entraîner le corps mobile (1) en déplacement ;
une unité d'obtention (53) configurée pour obtenir des coordonnées tridimensionnelles associées à un objet détecté situé autour du corps mobile à partir d'un dispositif de détection (40) sous forme de données de groupe de points indiqués en trois dimensions ;
une unité de division (54) configurée pour projeter les données de groupe de points sur un plan prédéterminé comprenant une pluralité de tronçons (G), qui est une pluralité de zones prédéterminées, et une origine (CO) qui est une position de référence des données de groupe de points, et pour diviser les données de groupe de points en données de groupe de points divisées (Dnm) en associant les données de groupe de points dont les projections se trouvent dans chaque tronçon (Gnm) à chaque tronçon (Gnm) ;
une unité de calcul de quantités caractéristiques (55) configurée pour calculer une quantité caractéristique de chaque tronçon (Gnm) à partir des données de groupe de points divisés (Dnm) ;
une unité de spécification de point de départ de recherche (56) configurée pour spécifier l'un des tronçons (Gnm) pouvant être parcouru par le corps mobile (1) comme point de départ de recherche sur la base de la quantité caractéristique calculée par l'unité de calcul de quantités caractéristiques (55) ;
une unité de détermination (57) configurée pour déterminer si l'une de la pluralité de tronçons (Gnm) entourant le point de départ de recherche spécifié par l'unité de spécification de point de départ de recherche (56) a une quantité caractéristique semblable à la quantité caractéristique du point de départ de recherche et peut être parcouru par le corps mobile (1) ; et
une unité de commande de conduite (52) configurée pour commander le dispositif de conduite (20) pour déplacer le corps mobile (1) sur la base du résultat de détermination de l'unité de détermination (57).

**2.** Corps mobile selon la revendication 1, dans lequel l'unité de calcul de quantités caractéristiques comprend :

une unité de spécification de plan présumé (55b) configurée pour spécifier un plan présumé à partir des données de groupe de points divisés associées au tronçon pour chaque tronçon ;
une unité d'identification (55c) configurée pour identifier un groupe de données de points effectifs et une quantité aberrante à partir des données de groupes de points divisés sur la base du plan présumé réglé par l'unité de spécification de plan présumé ;

une unité de calcul de vecteur normal (55d) configurée pour calculer un vecteur normal du tronçon à partir des données de groupe de points identifiées par l'unité d'identification ;

une unité de calcul d'inclinaison (55e) qui calcule une inclinaison qui est l'une des quantités caractéristiques du tronçon à partir du vecteur normal calculé par l'unité de calcul de vecteur normal ; et

une unité de calcul de hauteur (55f) configurée pour calculer une hauteur qui est une autre des quantités caractéristiques du tronçon (G) à partir des données de groupe de points effectifs identifiées par l'unité d'identification.

3. Corps mobile selon la revendication 2, dans lequel l'unité de calcul de quantités caractéristiques comprend en outre une unité de fusion (55a) configurée pour fusionner un tronçon dans lequel un nombre de données de groupes de points divisés est relativement faible et un tronçon voisin qui lui est adjacent, formant ainsi un nouveau tronçon qui est un tronçon fusionné par fusion,

dans lequel une hauteur et une inclinaison du tronçon fusionné par l'unité de fusion sont calculées.

4. Corps mobile selon l'une quelconque des revendications 1 à 3, dans lequel

l'unité de spécification de point de départ de recherche (56) est configurée pour spécifier un tronçon (G) comme point de départ de recherche lorsque le tronçon est positionné à une distance prédéterminée d'une position actuelle du corps mobile, le tronçon a une hauteur qui correspond à la quantité caractéristique calculée par l'unité de calcul de quantités caractéristiques et qui se situe dans une plage de détermination de hauteur et, en outre, le tronçon a une inclinaison qui correspond à la quantité caractéristique calculée par l'unité de calcul de quantités caractéristiques et qui se situe dans une plage de détermination d'inclinaison.

5. Corps mobile selon la revendication 4, dans lequel la plage de détermination de hauteur est spécifié en réponse à l'inclinaison calculée par l'unité de calcul de quantités caractéristiques (55).

6. Corps mobile selon l'une quelconque des revendications 1 à 5,

dans lequel l'unité de calcul de quantités caractéristiques (55) est configurée pour calculer la quantité caractéristique de chaque tronçon (Gnm) comprenant l'inclinaison et la hauteur de chaque tronçon (Gnm), et

dans lequel l'unité de détermination (57) est configurée pour déterminer une différence de hauteur entre le point de départ de recherche et chaque tronçon (Gnm), ainsi qu'une différence d'inclinaison entre le point de départ de recherche et chaque tronçon (Gnm).

7. Corps mobile selon l'une quelconque des revendications 1 à 6, dans lequel l'unité de détermination (57) renouvelle le point de départ de recherche par le tronçon de la pluralité de tronçons (Gnm) entourant le dernier point de départ de recherche dont la quantité caractéristique ressemble le plus au dernier point de départ de recherche, et détermine de manière répétée le tronçon entourant le nouveau point de départ de recherche.

FIG. 1

TOP

RIGHT          REAR

FRONT          LEFT

BOTTOM

1

30    50

40

41

12

20

20

10

11

20

13d 13b 13c 13a

13

FIG. 2

X
(FRONT (ADVANCING DIRECTION))

(xjs,yjs)

xjs

30

(LEFT)                    0    yjs          Y (RIGHT)

(REAR)

FIG. 3

```
                                              ┌─ 50
┌────────────┐        ┌──────────────┐                    ┌──────────────┐        ┌────────────┐
│            │   ┌─ 30│  OPERATION   │─ 51                 │   DRIVING    │─ 52    │            │─ 20
│ OPERATING  │───▶│ INFORMATION  │────────────────────────▶│   CONTROL    │───────▶│  DRIVING   │
│  DEVICE    │   │  OBTAINING   │                          │   PORTION    │        │   DEVICE   │
│            │   │   PORTION    │                          │              │        │            │
└────────────┘   └──────────────┘                          └──────────────┘        └────────────┘
                                  ┌──────────────────────┐        ▲
                  ┌──────────────┐│  FEATURE AMOUNT      │─ 55    │
┌────────────┐─ 40│ SURROUNDING  ││ CALCULATING PORTION  │   ┌──────────┐─ 57
│            │    │ INFORMATION  │─ 53                     │   │ JUDGING  │
│ DETECTING  │───▶│  OBTAINING   ││ ┌──────────────────┐─55a │  PORTION │
│  DEVICE    │    │   PORTION    ││ │ MERGING PORTION  │ │   └──────────┘
│            │    └──────────────┘│ └──────────────────┘ │        ▲
└────────────┘          │        │ ┌──────────────────┐─55b    │   ┌─ 56
                        ▼        │ │ PRESUMED PLANE   │ │   ┌──────────┐
                  ┌──────────┐─54│ │ SETTING PORTION  │ │   │  SEARCH  │
                  │ DIVIDING │   │ └──────────────────┘ │   │ STARTING │
                  │ PORTION  │───▶│ ┌──────────────────┐─55c │  POINT   │
                  └──────────┘   │ │IDENTIFYING PORTION│ │──▶│ SETTING  │
                                 │ └──────────────────┘ │   │ PORTION  │
                                 │ ┌──────────────────┐─55d └──────────┘
                                 │ │  NORMAL VECTOR   │ │
                                 │ │CALCULATING PORTION│ │
                                 │ └──────────────────┘ │
                                 │ ┌──────────────────┐─55e
                                 │ │   INCLINATION    │ │
                                 │ │CALCULATING PORTION│ │
                                 │ └──────────────────┘ │
                                 │ ┌──────────────────┐─55f
                                 │ │     HEIGHT       │ │
                                 │ │CALCULATING PORTION│ │
                                 │ └──────────────────┘ │
                                 └──────────────────────┘
```

FIG. 4A

FIG. 4B

FIG. 5

EP 3 378 695 B1

FIG. 6

● EFFECTIVE POINT GROUP

○ OUTLIER VALUE

PRESUMED PLANE PI

Dab

FIG. 7

● EFFECTIVE POINT GROUP

○ CENTER OF GRAVITY POINT OF EFFECTIVE POINT GROUP

NORMAL VECTOR

PRESUMED PLANE PI

CENTER OF GRAVITY POINT OF EFFECTIVE POINT GROUP

FIG. 8

EXAMPLE OF MATHEMATIC FORMULA
Hth = α × An1 + Hoffset

THRESHOLD VALUE OF HEIGHT[cm]

HEIGHT THRESHOLD VALUE Hth

Hoffset

INCLINATION α

INCLINATION An1

INCLINATION OF
SECTION[deg]

# FIG. 9

○ TRAVELABLE AREA

× NON-TRAVELABLE AREA

FRONT

SEARCH STARTING POINT (RENEWED)

SEARCH STARTING POINT

C

G

LEFT

G21  G11  C0  G17  G27

RIGHT

EP 3 378 695 B1

FIG. 10

START

OBTAIN ALL OF POINT GROUP DATA — S102

DIVIDE ALL OF POINT GROUP SECTIONS — S104

CALCULATE FEATURE AMOUNTS OF ALL SECTIONS — S106

ALL SECTIOS EVALUATED? — S108

YES

LABELING TO NON-SEARCHED SECTIONS — S110

END

NO

SETTING (EVALUATION) OF SEARCH STARTING POINT — S112

SEARCH STARTING POINT EXISTS? — S114   NO

YES

SEARCH FOR SURROUNDING SECTIONS COMPLETED? — S116   YES

NO — S118

DIFFERENCE IN HEIGHT > FIRST THRESHOLD VALUE?

YES

JUDGES STEP — S122

NO

DIFFERENCE IN ANGLE > SECOND THRESHOLD VALUE? — S120

YES

JUDGES INCLINATION — S124

NO

JUDGES TRAVELABLE AREA — S126

TRAVELABLE SECTION EXISTS? — S128   NO

YES — S130

SELECT MOST RESEMBLED SURROUNDING SECTION

RENEW SEARCH STARTING POINT — S132

EP 3 378 695 B1

FIG. 11

FEATURE AMOUNT CALCULATION

S202

ALL SECTIONS?
YES

END

NO   S204

JUDGE EFFECTIVE SECTION OR NOT
NUMBER OF POINTS IN GROUP >
JUDGING THRESHOLD VALUE
NO

S206

MERGE ADJACENT SECTION

YES

S208

JUDGE EFFECTIVE SECTION OR NOT
NUMBER OF POINTS IN GROUP>
JUDGING THRESHOLD VALUE
NO

YES   S210

SETTING PRESUMED PLANE

S218

LABEL OF VACANT SECTION

S212

IDENTIFY EFFECTIVE POINT GROUP
DATA AND OUTLIER VALUES

S214

CALCULATE NORMAL VECTOR

S216

CALCULATE HEIGHT AND INCLINATION OF SECTION

FIG. 12

( SEARCH STARTING POINT SETTING )

S302

VACANT SECTION? —— YES

NO — S304

WITHIN PREDETERMINED DISTANCE? —— NO

YES — S306

SECTION UN-SEARCHED? —— NO

YES — S308

CALCULATE HEIGHT THRESHOLD
VALUE BASED ON ANGLE

S310

HEIGHT < HEIGHT THRESHOLD VALUE, AND
ANGLE < ANGLE THRESHOLD VALUE? —— NO

YES — S312

SETTING OF SEARCH STARTING POINT

( END )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012220227 A
- JP 2006146376 A

- WO 2014064990 A1